# EUROPEAN PATENT APPLICATION

(11) **EP 4 583 631 A1**
(43) Date of publication of application: **09.07.2025**
(21) Application number: 23915261.4
(22) Date of filing: 09.01.2023
(51) Int. Cl.: H04W 80/02, H04W 28/02

(54) **MANAGEMENT FRAME TRANSMISSION METHOD AND APPARATUS, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN); ZHOU, Pei, Dongguan, Guangdong 523860 (CN)
(74) Representative: Novagraaf Technologies
(86) International application number: PCT/CN2023/071442
(87) International publication number: WO 2024/148481

(57) **Abstract**

A management frame transmission method and apparatus, a communication device, and a storage medium, which belong to the technical field of wireless communication. The method comprises: transmitting each of the management frames which is associated with perception on a first link (301); wherein each management frame is a unicast frame; and a specified management frame of the management frames is only transmitted via the first link.

## Description

### TECHNICAL FIELD

The present disclosure relates to the technical field of wireless communications, and in particular, relates to a method and apparatus for transmitting management frames, and a communication device and a storage medium thereof.

### RELATED ART

Wireless local area network (WLAN) sensing refers to a method of sensing people/objects in an environment by measuring changes in WLAN signals after these signals are scattered and/or reflected by people or objects.

In a related art, during a WLAN sensing session, devices participating in sensing or proxy sensing transmit sensing-related management frames to achieve WLAN sensing.

### SUMMARY

Embodiments of the present disclosure provide a method and apparatus for transmitting management frames, and communication device and a storage medium thereof. The technical solution is as follows.

In an aspect, the embodiments of the present disclosure provide a method for transmitting management frames. The method is applicable to a multi-link device and the method includes: transmitting management frames related to sensing on a first link, wherein the management frames are individually addressed frames, and a specified management frame in the management frames is only transmitted over the first link.

In another aspect, the embodiments of the present disclosure provide an apparatus for transmitting management frames. The apparatus is applicable to a multi-link device and the device includes: a transmitting module, configured to transmit management frames related to sensing on a first link, wherein the management frames are individually addressed frames, and a specified management frame in the management frames is only transmitted over the first link.

In yet another aspect, the embodiments of the present disclosure provide a communication device, wherein the communication device is a multi-link device. The communication device includes a processor, a memory, and a transceiver, wherein the memory stores a computer program, which is run by the processor to perform the method for transmitting management frames as described above.

In still another aspect, the embodiments of the present disclosure provide a computer-readable storage medium, which stores a computer program, wherein the computer program, when loaded and run by a processor, cause the processor to perform the method for transmitting management frames as described above.

In still another aspect, a computer program product is provided, which includes one or more computer instructions stored in a computer-readable storage medium. The processor of the communication device reads the one or more computer instructions from the computer-readable storage medium and executes them, causing the communication device to perform the method for transmitting management frames as described above.

In still another aspect, a chip is provided, which is run in a communication device to cause the communication device to perform the method for transmitting management frames as described above.

In still another aspect, a computer program is provided, which is run by a processor of a communication device to perform the method for transmitting management frames as described above.

The technical solutions according to the embodiments of the present disclosure achieve at least the following beneficial effects.

In the case that a multi-link device transmits unicast management frames related to sensing on a link, a specified management frame in the related unicast management frames may be restricted to be transmitted only over the current link, not allowing transmission over links other than the current link, such that the situation where the frame interaction sequence of sensing measurement over the current link is incomplete and thus implementation complexity is increased is avoided, and simultaneous execution of sensing measurement over different links is supported, thereby improving the efficiency of multi-link devices in performing WLAN sensing..

### BRIEF DESCRIPTION OF DRAWINGS

For clearer description of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art may still derive other drawings from these accompanying drawings without creative efforts.
FIG. 1 is a schematic diagram of a network architecture of a communication system according to some embodiments of the present disclosure;
FIG. 2 is a schematic diagram of a reference model of a multi-link device according to some embodiments of the present disclosure;
FIG. 3 is a flowchart of a method for transmitting management frames according to some embodiments of the present disclosure;
FIG. 4 is a flowchart of a method for transmitting management frames according to some embodiments of the present disclosure;
FIG. 5 is a flowchart of a method for transmitting management frames according to some embodiments of the present disclosure;
FIG. 6 is a block diagram of an apparatus for transmitting management frames according to some embodiments of the present disclosure; and
FIG. 7 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to more clearly illustrate the technical solutions according to the embodiments of the present disclosure and do not constitute a limitation on the technical solutions according to the embodiments of the present disclosure. Those skilled in the art may know that with the evolution of network architecture and the emergence of new service scenarios, the technical solutions according to the embodiments of the present disclosure are also applicable to similar technical problems.

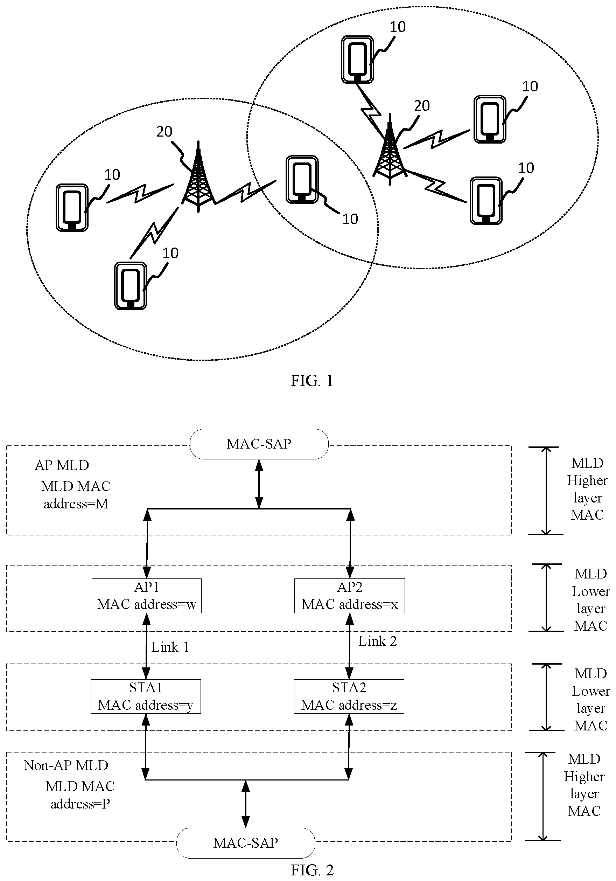

FIG. 1 illustrates a schematic diagram of a network architecture of a communication system according to some embodiments of the present disclosure. The network architecture may involve one or a plurality of stations 10 and one or a plurality of access points 20.

Typically, a plurality of stations 10 are configured, and each of the access points 20 may be associated with one or more stations 10. The stations 10 may include various handheld devices, in-vehicle devices, wearable devices, computing devices, or other processing devices having wireless communication functions, which are connected to a wireless modem, as well as various forms of user equipments (UEs), mobile stations (MSs), terminal devices, and the like. For convenience of description, in the embodiments of the present disclosure, the above-mentioned devices are collectively referred to as stations (STAs).

The access point 20 is a device deployed in an access network to provide wireless communication functions to the station 10, and may also be referred to an AP. The access point 20 may include various forms of wireless routers, wireless switches, wireless relay devices, and the like.

The above-mentioned station 10 and/or access point 20 can be multi-link devices.

In some embodiments, not illustrated in FIG. 1, the network architecture also involves other network devices, such as gateway devices or the like.

The station 10 may be associated with and communicate with the access point 20 using WLAN technologies, for example, the station 10 communicates with the access point 20 using the IEEE 802.11 protocol.

The IEEE 802.11 BF Work Group discusses the formulation of protocols to specify how to achieve WLAN sensing using WLAN signals that comply with the IEEE 802.11 protocol. A WLAN terminal participating in sensing may function as, for example, a sensing session initiator, a sensing session responder, a sensing signal transmitter, a sensing signal receiver, or the like.

A WLAN sensing session includes one or more of the following phases: session setup, sensing measurement, sensing reporting, and session termination. A WLAN terminal may assume one or more roles in one sensing session. For example, a sensing session initiator may be a sensing session initiator, or a sensing signal transmitter, or a sensing signal receiver, or both a sensing signal transmitter and a sensing signal receiver.

Before introducing the technical solutions according to the present disclosure, some technical knowledge involved in the present disclosure is introduced and explained.

### 1) Multi-link device (MLD)

In related standards and protocols, a function of supporting multiple links is defined. According to the definition of two ends of communication in the standards and protocols, one end is an STA MLD, and the other end is an AP MLD. An STA MLD and an AP MLD that have established multiple links may transmit and receive data over the multiple links achieve by the merits of the multiple links, to achieve high throughput, low latency, and other advantages.

In traditional single-link devices, each of the single-link devices has a medium access control (MAC) address, and this single-link device may be identified by this single MAC address. In the multi-link devices defined in the related standards, because there are multiple links in the multi-link device, each of the multiple links has an independent MAC address, and at the same time, the multi-link device has a single multi-link device MAC address (MLD MAC address).

FIG. 2 illustrates a schematic diagram of a reference model of a multi-link device. As illustrated in FIG. 2, two links are present between two multi-link devices: a link 1 and a link 2, and each of the multi-link devices has an independent link MAC address (or referred to as a wireless medium (WM) MAC address) on each of the links in a lower MAC layer, and a single MLD MAC address in an upper MAC layer.

### 2) Anti-replay of data frames and robust management frames

Generally, to prevent replay attacks, the transmitter sets one incrementing packet number (PN) in the Counter Mode with Cipher Block Chaining Message Authentication Code Protocol (CCMP) and/or Galois/Counter Mode Protocol (GCMP) packets of data frames and/or robust management frames. This packet number does not repeat for MAC protocol data units (MPDUs) encrypted with the same temporal key (TK), with an initial value of 0. The receiver correspondingly maintains one or more replay counters, with an initial value of 0. In response to successful receipt of a frame (including successful decryption), a corresponding replay counter is updated to a packet number (PN) value in the frame. In the case that the receiver performs replay checking before decrypting the frame body, a value of the replay counter is updated to the PN value in the frame only in the case that decryption is successful and the frame is accepted. The receiver, checks, based on the PN of a currently received frame, whether the frame is a replayed frame. In the case that the PN of the currently received frame is less than or equal to a current value of the replay counter, the frame is determined to be the replayed frame and is directly discarded. For example, in the case that the receiver successfully receives a frame with PN 5, the replay counter is updated to 5. In the case that a frame with PN 5 or 4 or smaller is received thereafter, the frame is discarded and the replay counter is not updated again.

The current standards stipulate that for the same TK, under the condition of satisfying the limit of the maximum number of supported replay counters, the receiver maintains a separate replay counter (denoted as C1) for all data frames corresponding to each traffic identifier (TID). In the case that the management frame protection function is enabled, the receiver also maintains a separate replay counter (denoted as C2) for all individually addressed robust management frames of non-quality-of-service management frame (non-QMF). In the case that the management frame transmission quality assurance function is also enabled, the receiver also maintains a separate replay counter (denoted as C3) for all individually addressed robust management frames corresponding to each access category index (ACI).

### 3) Anti-replay in ranging

Based on the anti-replay mechanism of data frames and robust management frames, in the case that a ranging device shares a replay counter with other robust management frames (such as the aforementioned C2 or a specified C3), when the ranging device receives a robust fine timing measurement (FTM) frame and/or location measurement report (LMR) frame, there are other robust management frames to be transmitted in the buffer, and thus transmitting the robust FTM and/or LMR frame before the buffered other robust management frames may cause the buffered other robust management frames to be discarded by the receiver. For example, in the case that a frame with PN 7 is transmitted before a frame with PN 6, the frame with PN 6 may be discarded.

Under this mechanism, in the case that ranging device shares one replay counter with other robust management frames, and the ranging device has prepared and buffered robust FTM and/or LMR frames but needs to wait for a specific timing (e.g., within a negotiated ranging schedule) to report, this case may also cause head of line (HOL) blocking, thereby preventing other robust management frames in the buffer from being transmitted in time. For example, even through the current channel is idle, a frame with PN 8 may be transmitted until a frame with PN 7 is transmitted.

Therefore, the IEEE 802.11az standards add a separate replay counter (denoted as C4, different from the aforementioned C1, C2, and C3) for FTM and LMR used for ranging, and correspondingly checks, based on the PN in the received frame, whether the frame is a replayed frame. Replays are detected in accordance with the following processing rules.

Based on the anti-replay scheme of data frames and robust management frames, during the ranging process, the receiver checks whether the locally set dot11RSNAProtectedManagementFramesActivated is true. In the case that dot11RSNAProtectedManagementFramesActivated is true, the receiver maintains a separate replay counter for receiving individually addressed protected fine timing frames and detects replays based on the PN from the received frame.

The receiver should discard any data frame that is received with its PN less than or equal to the value of the replay counter that is associated with the TA and priority value of the received MPDU. The receiver should discard MSDUs and MMPDUs whose constituent MPDU PN values are not incrementing in steps of 1. In the case that dot11RSNAProtectedManagementFramesActivated is true, the receiver should discard an individually addressed robust management frame that is received with its PN less than or equal to the value of the replay counter associated with the TA of that individually addressed management frame.

### 4) Anti-replay in sensing

Similar to ranging, the IEEE 802.11bf standards adds a separate replay counter (denoted as C5, different from the aforementioned C1, C2, C3, and C4) for sensing measurement reporting and sensing by proxy reporting, and correspondingly checks, based on the PN in the received frame, whether the frame is a replayed frame.

### 5) Anti-replay in multi-link devices

The IEEE 802.11be standards specify that in multi-link operations, security association negotiation is conducted at an MLD level, not at an affiliated station level, and a generated pairwise transient key security association (PTKSA) context, including the TK, is at the MLD level. The IEEE 802.11be standards further specify that the aforementioned C1 is at the MLD level (associated with the transmitter MLD MAC address), while C2 and C3 remain at an STA level (associated with the TA, implicitly indicating that C4 and C5 are also at the STA level).

Refer to the description of how the PN is encoded in the CCMP header as illustrated in IEEE 802.11be 12.5.2.2 (CCMP MPDU format). Replays are detected in accordance with the following processing rules.

Based on the anti-replay scheme of data frames and robust management frames, the receiver should discard any data frame that is received with its PN less than or equal to the value of the replay counter that is associated with the TA and priority value of the received MPDU. If the MPDU is an individually addressed data frame transmitted by an STA affiliated with an MLD, the receiver should discard any data frame that is received with a PN less than or equal to the value of the replay counter that is associated with the transmitter MLD MAC address and priority value of the received MPDU. The receiver should discard MSDUs and MMPDUs whose constituent MPDU PN values are not incrementing in steps of 1. In the case that the receiver sets the MFPC bit on a given link to 1, the receiver should discard any individually addressed robust management frame that is received with its PN less than or equal to the value of the replay counter associated with the TA of that individually addressed management frame. The frame body of the management frame on one link needs to be re-encapsulated and re-encrypted when transmitted over other links.

### 6) Transmission of management frames in multi-link devices

According to the description of multi-link device addressing in IEEE 802.11be 35.3.2, the transmitter address (TA) and receiver address (RA) of an individually addressed frame transmitted between a pair of multi-link devices are set as follows: TA is generally the MAC address of the STA affiliated with the MLD corresponding to the link transmitting the frame, and RA is the MAC address of the STA affiliated with the MLD corresponding to the link receiving the frame.

For an individually addressed frames transmitted over a link between two MLDs, the following applies.

The value of the Address 2 (TA) field (if present) in the MAC header of the frame that is not a probe response frame shall be the MAC address of the transmitting STA affiliated with the MLD corresponding to that link except for the individual/group bit, which is set to 1 when the TA field value is a bandwidth signaling TA and set to 0 otherwise.

The value of the Address 1 (RA) field in the MAC header of the frame shall be the MAC address of the receiving STA affiliated with the MLD corresponding to that link.

According to IEEE 802.11be 35.3.7.1 TID-to-link mapping, in the case that a link is enabled for a non-AP MLD, then individually addressed management frames, QoS null frames, and control frames may be transmitted over any enabled links between the corresponding non-AP MLD and AP MLD both in DL and UL.

A non-AP MLD may retrieve buffered BUs that are individually addressed MMPDUs available at the AP MLD over any enabled link. An AP MLD may use any enabled links to transmit individually addressed management frames (see Table 11-3 (Bufferable/nonbufferable classification of MMPDUs)) subject to the rules defined in IEEE 802.11be 35.3.14 (Multi-link device individually addressed management frame delivery) and subject to the power state of the non-AP STA on each of the links (see IEEE 802.11be 35.3.12 (Multi-link power management)).

If a non-AP STA affiliated with a non-AP MLD is in active mode on a link with a set of TIDs mapped for DL transmission, its associated AP affiliated with the AP MLD shall transmit to the non-AP STA:
- MAC service data unit (MSDUs)/aggregate MAC service data unit (A-MSDUs), if any, corresponding to that set of negotiated TIDs for the non-AP MLD; and
- MAC management protocol data units (MMPDUs), if any, for the non-AP MLD or its affiliated non-AP STAs, subject to the rules defined in 35.3.14 (Multi-link device individually addressed management frame delivery);
unless the MSDUs/A-MSDUs and/or MMPDUs stated above are transmitted to another non-AP STA that is affiliated with the same non-AP MLD and in an active mode or in PS mode and in an awake state.

Table 11-3 in IEEE 802.11be is illustrated as Table 1 below.

**Table 1**

| Description | Classification |
|---|---|
| For non-MLO, an MMPDU that is carried in one or more action (except for fine timing measurement frame and fine timing measurement request frame), disassociation, or deauthentication frame | Bufferable |
| For MLO, an MMPDU that is carried in one or more action (except for TPC request frame, link measurement request frame, fine timing measurement frame, fine timing measurement request frame), disassociation, or deauthentication frame | |
| An individually addressed MMPDU that is carried in one or more probe response frames and that is transmitted in an IBSS in response to an individually addressed probe request frame | Bufferable |
| All other MMPDUs | Nonbufferable |

According to the description of multi-link device individually addressed management frame delivery in IEEE 802.11be 35.3.14, except for CSI frame, noncompressed beamforming frame, compressed beamforming frame, VHT compressed beamforming frame, HE compressed beamforming/CQI frame, EHT compressed beamforming/CQI frame, probe response frame, LMR frame, FTM frame (referred to as excluded frames):

Between an MLD and an associated peer MLD, an STA affiliated with the MLD with dot11QMFActivated equal to false shall not transmit other individually addressed management frames (except the frames that are excluded above) over a setup link while the current individually addressed management frame (except the frames that are excluded above) being transmitted by any STA affiliated with the same MLD over a setup link has not yet completed to the point of success, failed due to retry limit, or other MAC discard (e.g., lifetime expiration).

Between an AP MLD and an associated non-AP MLD subject to additional constraints (see IEEE 802.11be 35.3.7 (Link management)), an MLD may transmit an individually addressed MMPDU, which is intended for one or more STA(s) affiliated with the associated MLD operating on an enabled link, to another STA (other than the intended STA(s)) affiliated with the associated MLD operating on a setup link through an STA affiliated with the MLD operating on the setup link if the MMPDU satisfies all the following conditions:
- the MMPDU is a Class 3 frame;
- the MMPDU is not a TPC request frame, a TPC report frame, a link measurement request frame, or a link measurement response frame;
- the MMPDU is classified as a bufferable MMPDU;
- the MMPDU is not one of the frames listed at the beginning of IEEE 802.11be 35.3.14.1 General.

Otherwise, an MLD shall not transmit an individually addressed MMPDU, which is intended for one or more STA(s) affiliated with the associated MLD operating on an enabled link, to another STA (other than the intended STA(s)) affiliated with the associated MLD operating on a setup link through an STA affiliated with the MLD operating on the setup link subject to additional constraints (see IEEE 802.11be 35.3.7 Link management.)

### 7) How multi-link devices identify target stations in frames

According to the description in IEEE 802.11be 35.3.14.2 (Identification of the intended STA), when the target station of a frame is not the peer station of the current link, a TWT element or MLO Link Information element indicating the link ID bitmap field of the target station needs to be added to the frame.

Between an AP MLD and a non-AP MLD associated with the AP MLD, an individually addressed MMPDU that is not a TWT Setup frame that includes a link ID bitmap subfield in its TWT element and that is intended for one or more STA(s) affiliated with the associated MLD operating on an enabled link shall follow the below procedure.
- If the individually addressed MMPDU is transmitted to another STA (other than the intended STA(s)) affiliated with the associated MLD operating on a setup link through an STA affiliated with the MLD operating on the setup link, then the individually addressed MMPDU shall include MLO link information element that identifies the intended link(s) of the MMPDU as the last element but before the vendor specific element(s) (if present).
- Otherwise, the individually addressed MMPDU may include MLO link information element that identifies the intended link(s) of the MMPDU as the last element but before the vendor specific element(s) (if present).

NOTE-If the MLO link information element is not present in the individually addressed MMPDU, the individually addressed MMPDU cannot be retransmitted to different STA as described in the first bullet above.

Currently, neither IEEE 802. 11be nor IEEE 802. 11bf explicitly specifies whether sensing-related management frames on one link can be transmitted over another link.

For example, sensing measurement report frames and/or sensing by proxy report frames need to be transmitted at specific times (sensing measurement times) and in specific frame interaction sequences (sensing measurement frame interaction sequences). In the case that the sensing-related management frames on one link are allowed to be transmitted over other links, this case may lead to incomplete frame interaction sequences of sensing measurement on the current link, thereby causing implementation complexity. Moreover, in the case that the sensing-related management frames on one link are allowed to be transmitted over other links, according to the aforementioned method for transmitting management frames of the multi-link device, only the same management frame may be transmitted at the same time, thereby resulting in different links not being able to perform sensing measurement simultaneously and reducing overall efficiency.

For another example, sensing measurement setup request frames, and/or sensing measurement setup response frames, and/or sensing measurement setup termination frames, and/or sensing measurement setup query frames, and/or sensing by proxy (SBP) request frames, and/or SBP response frames, and/or SBP termination frames are not time-sensitive. In the case that the sensing-related management frames on one link are not allowed to be transmitted over other links, the device may not be able to enter a power-saving state before completion of transmission over the current link, which is not conducive to energy saving.

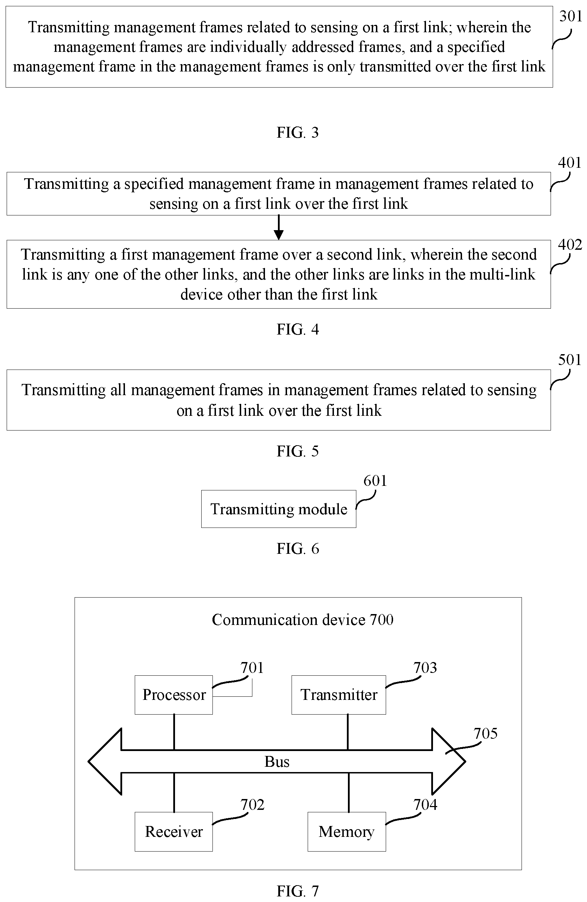

FIG. 3 illustrates a flowchart of a method for transmitting management frames according to some embodiments of the present disclosure. The method is applicable to a multi-link device, wherein the multi-link device may be a station 10 or an access point 20 in the network architecture illustrated in FIG. 1. The method may include the following processes.

In 301, management frames related to sensing on a first link are transmitted; wherein the management frames are individually addressed frames, and a specified management frame in the management frames is only transmitted over the first link.

The above first link is any one of the links in the multi-link device configured with sensing measurement or sensing by proxy (or referred to as sensing measurement service or sensing by proxy service).

That is, the specified management frame in the management frames related to sensing on one link is not allowed to be transmitted over other links, wherein the other links are links in the multi-link device other than the first link.

The above-mentioned individually addressed management frames related to sensing on the first link may refer to individually addressed management frames related to WLAN sensing or sensing by proxy configured on the first link.

In some embodiments, the above management frames may include at least one of a sensing measurement setup request frame, a sensing measurement setup response frame, a sensing measurement setup termination frame, a sensing measurement report frame, a sensing measurement setup query frame, an SBP request frame, an SBP response frame, an SBP termination frame, or an SBP report frame.

In some embodiments, the specified management frame may include part of the above management frames.

For example, the specified management frame can be a management frame transmitted at specific times (sensing measurement times) and in specific frame interaction sequences (sensing measurement frame interaction sequences) in the above management frames.

For example, the specified management frame includes at least one of the sensing measurement report frame or the SBP report frame.

For another example, the specified management frame includes one or more other management frames in addition to the sensing measurement report frame and/or the SBP report frame, for example, the specified management frame includes the sensing measurement report frame, the SBP report frame, the sensing measurement setup query frame, or the like.

In some other embodiments, the specified management frame includes all management frames in the above management frames. That is, for a multi-link device, each of the individually addressed management frames related to sensing on one link is only allowed to be transmitted over the current link, not over other links.

In some embodiments, the frame bodies of the management frames are allowed to be buffered.

That is, in the above embodiments, frame bodies of all management frames related to sensing (i.e., their MMPDUs, such as frame bodies of the sensing measurement setup request frame, the sensing measurement setup response frame, the sensing measurement setup termination frame, the sensing measurement report frame, the sensing measurement setup query frame, the SBP request frame, the SBP response frame, the SBP termination frame, and the SBP report frame) may be buffered.

In some embodiments, the frame body of the specified management frame is not allowed to be buffered, while the frame bodies of other management frames in the management frames except the specified management frame are allowed to be buffered.

That is, in the above embodiments, frame bodies of a part of the management frames related to sensing (i.e., its MMPDU, such as frame bodies of the sensing measurement report frame and/or the SBP report frame) cannot be buffered.

For example, exceptions may be added to Table 11-3 (Bufferable/nonbufferable classification of MMPDUs), and the updated content of Table 11-3 may be as illustrated in Table 2 below.

**Table 2**

| Description | Classification |
|---|---|
| For non-MLO, an MMPDU that is carried in one or more action (except for fine timing measurement frame and fine timing measurement request frame), disassociation, or deauthentication frame; | Bufferable |
| For MLO, an MMPDU that is carried in one or more action (except for TPC request frame, link measurement request frame, fine timing measurement frame, fine timing measurement request frame, **sensing measurement report frame and SBP report frame**), disassociation, or deauthentication frame | |
| An individually addressed MMPDU that is carried in one or more probe response frames and that is transmitted in an IBSS in response to an individually addressed probe request frame | Bufferable |
| All other MMPDUs | Nonbufferable |

In the above embodiments, frame bodies of another part of the management frames related to sensing (i.e., its MMPDUs, such as a frame body of at least one of the sensing measurement setup request frame, the sensing measurement setup response frame, the sensing measurement setup termination frame, the sensing measurement setup query frame, the SBP request frame, the SBP response frame, or the SBP termination frame) may be buffered.

In summary, the scheme illustrated in the embodiments of the present disclosure allows a multi-link device to restrict the specified management frame in the individually addressed management frames related to sensing over a link from being transmitted over other links except the current link, such that the situation where the frame interaction sequence of sensing measurement on the current link is incomplete and thus implementation complexity is increased is avoided, and simultaneous execution of sensing measurement on different links is supported, thereby improving the efficiency of multi-link devices in performing WLAN sensing.

Based on the embodiment illustrated in FIG. 3, taking the specified management frame including part of the individually addressed management frames related to sensing on the first link as an example, FIG. 4 illustrates a flowchart of a method for transmitting management frames according to some embodiments of the present disclosure. The method is applicable to a multi-link device, wherein the multi-link device may be a station 10 or an access point 20 in the network architecture illustrated in FIG. 1. The method may include the following processes.

In 401, a specified management frame in management frames related to sensing on a first link is transmitted over the first link.

The management frames are individually addressed frames, that is, destination address for transmission of the management frames are individual addresses; and the specified management frame in the management frames is only transmitted over the first link.

In the embodiments, a part of the individually addressed management frames related to sensing on one link are now allowed to be transmitted over other links.

For example, the sensing measurement report frame and/or the SBP report frame may be added to the "list of excluded frames" in the multi-link device individually addressed management frame delivery section of IEEE 802.11be 35.3.14. Thus, according to the rules of transmitting management frames of the multi-link device, different sensing measurement reports and/or SBP reports may be transmitted simultaneously over different links.

In 402, a first management frame is transmitted over a second link, wherein the second link is any one of the other links, and the other links are links in the multi-link device other than the first link.

The first management frame is part of the management frames other than the specified management frame in the management frames, or the first management frame includes all management frames other than the specified management frame in the management frames.

The embodiments do not limit the execution order of process 401 and process 402. In some embodiments, the specified management frame is transmitted over the first link first, and then the first management frame is transmitted over the second link. In some other embodiments, the first management frame is transmitted over the second link first, and then the specified management frame is transmitted over the first link. In some other embodiments, the specified management frame may be transmitted over the first link while the first management frame is transmitted over the second link.

The part of the management frames includes: one management frame other than the specified management frame in the management frames; or two or more management frames other than the specified management frame in the management frames.

In some embodiments, one or more management frames (i.e., the first management frame) other than the specified management frame in the management frames related to sensing on the first link may be transmitted over other links (i.e., the second link) other than the first link.

That is, one or more management frames other than the specified management frame in the management frames related to sensing on the first link may be transmitted over each of on one or more links other than the first link in the multi-link device.

In some embodiments, assuming that the multi-link device includes at least a link 1 and a link 2 (and may include more links such as a link 3), the link 1 is configured with sensing measurement and/or sensing by proxy, and the specified management frame includes the sensing measurement report frame and the SBP report frame, then the first management frame may include one of the sensing measurement setup request frame, the sensing measurement setup response frame, the sensing measurement setup termination frame, the sensing measurement setup query frame, the SBP request frame, the SBP response frame, or the SBP termination frame; assuming that the first management frame is the sensing measurement setup request frame, then the sensing measurement report frame and the SBP report frame are only transmitted over the link 1, and the sensing measurement setup request frame is transmitted over the link 2; and other individually addressed management frames related to sensing (such as at least one of the sensing measurement setup response frame, the sensing measurement setup termination frame, the sensing measurement setup query frame, the SBP request frame, the SBP response frame, or the SBP termination frame) may be transmitted over other links (such as the link 1 or the link 3) other than the link 2.

In some embodiments, assuming that the multi-link device includes at least a link 1 and a link 2 (and may include more links such as a link 3), the link 1 is configured with sensing measurement and/or sensing by proxy, and the specified management frame includes the sensing measurement report frame and the SBP report frame, then the first management frame may include two of the sensing measurement setup request frame, the sensing measurement setup response frame, the sensing measurement setup termination frame, the sensing measurement setup query frame, the SBP request frame, the SBP response frame, or the SBP termination frame; assuming the first management frame includes the sensing measurement setup request frame and the SBP request frame, then the sensing measurement report frame and the SBP report frame are only transmitted over the link 1, and the sensing measurement setup request frame and the SBP request frame are transmitted over the link 2; and other individually addressed management frames related to sensing (such as at least one of the sensing measurement setup response frame, the sensing measurement setup termination frame, the sensing measurement setup query frame, the SBP response frame, or the SBP termination frame) may be transmitted over other links (such as the link 1 or the link 3) other than the link 2.

In some embodiments, assuming that the multi-link device includes at least a link 1 and a link 2 (and may include more links such as a link 3), the link 1 is configured with sensing measurement and/or sensing by proxy, and the specified management frame includes the sensing measurement report frame and the SBP report frame, then the first management frame may include four of the sensing measurement setup request frame, the SBP request frame, the sensing measurement setup response frame, or the SBP response frame; assuming that the first management frame includes the sensing measurement setup request frame, the SBP request frame, the sensing measurement setup response frame, and the SBP response frame, then the sensing measurement report frame and the SBP report frame are only transmitted over the link 1, and the sensing measurement setup request frame, the SBP request frame, the sensing measurement setup response frame, and the SBP response frame are transmitted over the link 2; and other individually addressed management frames related to sensing (such as at least one of the sensing measurement setup termination frame, the sensing measurement setup query frame, or the SBP termination frame) may be transmitted over other links (such as the link 1 or the link 3) other than the link 2.

For the case where the first management frame includes all management frames other than the specified management frame in the management frames, assuming that the multi-link device includes at least a link 1 and a link 2 (and may include more links such as a link 3), the link 1 is configured with sensing measurement and/or sensing by proxy, and the specified management frame includes the sensing measurement report frame and the SBP report frame, then the first management frame may include all of the sensing measurement setup request frame, the sensing measurement setup response frame, the sensing measurement setup termination frame, the sensing measurement setup query frame, the SBP request frame, the SBP response frame, and the SBP termination frame; and the sensing measurement report frame and the SBP report frame are only transmitted over the link 1, and the sensing measurement setup request frame, the sensing measurement setup response frame, the sensing measurement setup termination frame, the sensing measurement setup query frame, the SBP request frame, the SBP response frame, and the SBP termination frame are all transmitted over the link 2.

In the case that the first management frame transmitted over the second link includes two or more management frames, these two or more management frames may be transmitted sequentially over the second link.

In some embodiments, the first management frame contains multi-link operation link information, wherein the multi-link operation link information indicates a link ID bitmap field of a target station.

In the embodiments, another part of the individually addressed management frames related to sensing on one link may be transmitted over other links, and when the another part of the management frames are transmitted over other links, the MLO (multi-link operation) link information element indicating the link ID bitmap field of the target station needs to be added. That is, when following the method in IEEE 802.11be 35.3.14.2 Identification of the intended STA, at least one of the sensing measurement setup request frame, the sensing measurement setup response frame, the sensing measurement setup termination frame, the sensing measurement setup query frame, the SBP request frame, the SBP response frame, or the SBP termination frame may be transmitted over other links.

In some embodiments, any two sensing-related management frames other than the specified management frame are not transmitted simultaneously over at least two links.

Any two sensing-related management frames other than the specified management frame may include any two sensing-related management frames other than the specified management frame on the same link, or any two sensing-related management frames of the same or different types other than the specified management frame on different links.

In the embodiments of the present disclosure, according to the rules of transmitting management frames of the multi-link device, different links may be configured with different sensing measurement setups and/or sensing by proxy. However, at a specified time, the MLD may only transmit one management frame related to sensing measurement setup or sensing by proxy, other than the sensing measurement report frame and/or the SBP report frame, and may not transmit different management frames related to sensing measurement setup or sensing by proxy on different links.

By using the scheme illustrated in the embodiments of the present disclosure, because only the sensing measurement report frame and/or the SBP report frame are used in the specific measurement sequence, different measurements may be performed on different links during execution.

In addition, for measurement-related settings (such as setup and termination), although the configurations on different links are different, only one management frame may be transmitted at a specified time; for example, in the case that there is a sensing measurement setup request frame on both the link 1 and the link 2, only the sensing measurement setup request frame of the link 1 may be transmitted over all links at a specified time, and only the sensing measurement setup request frame of the link 2 may be transmitted over all links at another time; that is, the two sensing measurement setup request frames are not allowed to be transmitted simultaneously over different links.

For example, in the management frames related to sensing on the link 1, the management frames other than the specified management frame include a management frame 1 (such as the sensing measurement setup request frame) and a management frame 2 (such as the sensing measurement setup response frame), then only the management frame 1 may be transmitted over all links at a specified time, and only the management frame 2 may be transmitted over all links at another time, that is, the management frame 1 and the management frame 2 are not allowed to be transmitted simultaneously over different links.

In summary, the scheme illustrated in the embodiments of the present disclosure allows a multi-link device to restrict part of the individually addressed management frames related to sensing on a specified link from being transmitted over other links except the current link, such that the situation where the frame interaction sequence of sensing measurement on the current link is incomplete and thus implementation complexity is increased is avoided, and simultaneous execution of sensing measurement on different links is supported, thereby improving the efficiency of multi-link devices in performing WLAN sensing.

Based on the embodiment illustrated in FIG. 3, taking the specified management frame as including part of the individually addressed management frames related to sensing on the first link as an example, please refer to FIG. 5, which illustrates a flowchart of a method for transmitting management frames according to some embodiments of the present disclosure. The method is applicable to a multi-link device, wherein the multi-link device may be a station 10 or an access point 20 in the network architecture illustrated in FIG. 1. The method may include the following processes.

In 501, all management frames in management frames related to sensing on a first link are transmitted over the first link.

Each of the management frames is an individually addressed frame, and the specified management frame in the management frames is only transmitted over the first link.

In this embodiment, all individually addressed management frames related to sensing on one link may not be transmitted over other links. For example, the sensing measurement setup request frame, the sensing measurement setup response frame, the sensing measurement setup termination frame, the sensing measurement report frame, the sensing measurement setup query frame, the SBP request frame, the SBP response frame, the SBP termination frame, and the SBP report frame may be added to the "list of excluded frames" in the multi-link device individually addressed management frame delivery section of IEEE 802.11be 35.3.14. Thus, according to the rules of transmitting management frames of the multi-link device, different sensing measurements may be performed on different links, and different sensing-related management frames may be transmitted simultaneously.

In summary, the scheme illustrated in the embodiments of the present disclosure allows a multi-link device to restrict all individually addressed management frames related to sensing on a specified link from being transmitted over other links except the current link, such that the situation where the frame interaction sequence of sensing measurement on the current link is incomplete and thus implementation complexity is increased is avoided, and simultaneous execution of sensing measurement on different links is supported, thereby improving the efficiency of multi-link devices in performing executing WLAN sensing.

FIG. 6 illustrates a block diagram of an apparatus for transmitting management frames according to some embodiments of the present disclosure. The apparatus has the function of implementing the processes performed by a multi-link device in the above method for transmitting management frames. As illustrated in FIG. 6, the device may include a transmitting module 601.

The transmitting module 601 is configured to transmit each of management frames related to sensing over a first link, wherein each of the management frames is an individually addressed frame, and a specified management frame in the management frames is only transmitted over the first link.

In some embodiments, the specified management frame includes at least one of a sensing measurement report frame or an SBP report frame.

In some embodiments, the transmitting module 601 is configured to: transmit a specified management frame over the first link; and transmit a first management frame over a second link, wherein the second link is any one of other links which are links in at least two links of the multi-link device other than the first link, the first management frame is part of the management frames other than the specified management frame in the management frames, or the first management frame includes all management frames other than the specified management frame in the management frames.

In some embodiments, the first management frame contains multi-link operation link information, wherein the multi-link operation link information indicates a link ID bitmap field of a target station.

In some embodiments, any two sensing-related management frames other than the specified management frame are not transmitted simultaneously over at least two links.

In some embodiments, the specified management frame includes all management frames in the management frames.

In some embodiments, a frame body of each of the management frames is allowed to be buffered.

In some embodiments, a frame body of the specified management frame is not allowed to be buffered; frame bodies of other management frames other than the specified management frame in the management frames are allowed to be buffered.

It should be noted that when implementing the functions of the apparatus according to the above embodiments, the division of the functional module is only for illustrative purposes. In practice, the functions may be distributed to different functional modules based on actual needs, that is, the content structure of the apparatus may be divided into different functional modules to complete all or part of the functions described above.

Regarding the apparatus in the above embodiments, the specific way in which each module performs operations has been described in detail in the relevant method embodiments, and will not be repeated any further.

FIG. 7 illustrates a schematic diagram of a structure of a communication device 700 according to some embodiments of the present disclosure. The communication device 700 may be a multi-link device; and the communication device 700 may include a processor 701, a receiver 702, a transmitter 703, a memory 704, and a bus 705.

The processor 701 includes one or more processing cores, and the processor 701 executes various functional applications and information processing by running software programs and modules.

The receiver 702 and the transmitter 703 may be implemented as one communication assembly, wherein the communication assembly may be a communication chip. This communication chip may also be referred to as a transceiver.

The memory 704 is connected to the processor 701 via the bus 705.

The memory 704 may be configured to store one or more computer programs, wherein the one or more computer programs, when run by the processor 701, causes the processor 701 to perform the processes performed by the terminal device in the above method embodiments.

In addition, the memory 704 may be implemented by any type of volatile or non-volatile storage device or a combination thereof, including but not limited to: a disk or optical disk, an electrically erasable programmable read-only memory, an erasable programmable read-only memory, a static random access memory, a read-only memory, a magnetic memory, a flash memory, or a programmable read-only memory.

In some embodiments, the communication device includes a processor, a memory, and a transceiver (the transceiver may include a receiver and a transmitter, wherein the receiver receives information, and the transmitter transmits information).

In some embodiments, the processor and the transceiver may be configured to perform all or part of the processes in any of the embodiments illustrated in FIGS. 3 to 5, which is not described herein any further.

Some embodiments of the present disclosure further provide a computer-readable storage medium storing a computer program. The computer program is loaded and run by a processor to perform the processes performed by a multi-link device in any of the methods illustrated in FIGS. 3 to 5.

Some embodiments of the present disclosure further provide a computer program product including one or more computer instructions stored in a computer-readable storage medium. The one or more computer instructions, when read from the computer-readable storage medium and executed by a processor of a communication device, cause the communication device to perform the processes performed by a multi-link device in any of the methods illustrated in FIGS. 3 to 5.

Some embodiments of the present disclosure further provide a chip, which is configured to run in a communication device to cause the communication device to perform the processes performed by a multi-link device in any of the methods illustrated in FIGS. 3 to 5.

Some embodiments of the present disclosure further provide a computer program, which is run by the processor of the communication device to perform the processes performed by a multi-link device in any of the methods illustrated in FIGS. 3 to 5.

Those skilled in the art should be aware that in one or more of the above examples, the functions described in the embodiments of the present disclosure may be implemented using hardware, software, firmware, or any combination thereof. In the case that the functions are implemented using software, these functions may be stored on a computer-readable medium or transmitted as one or more instructions or codes on a computer-readable medium. A computer-readable medium includes a computer storage medium and a communication medium, wherein communication medium includes any medium that facilitates the transfer of a computer program from one place to another. The storage medium may be any available medium that is accessible by a general-purpose or special-purpose computer.

The above are only embodiments of the present disclosure and are not intended to limit the present disclosure. Any modifications, equivalent replacements, improvements, and the like, made within the spirit and principles of the present disclosure should be included within the scope of protection of the present disclosure.

## Claims

1. A method for transmitting management frames, applicable to a multi-link device, the method comprising:
transmitting management frames related to sensing on a first link, wherein the management frames are individually addressed frames, and a specified management frame in the management frames is only transmitted over the first link.

2. The method according to claim 1, wherein the specified management frame comprises at least one of:
a sensing measurement report frame or a sensing by proxy report frame.

3. The method according to claim 1 or 2, wherein transmitting the management frames related to sensing on the first link comprises:
transmitting a first management frame over a second link, wherein the second link is any one of other links, the other links being links in at least two links of the multi-link device other than the first link, the first management frame comprises part of management frames other than the specified management frame in the management frames, or the first management frame comprises all of management frames other than the specified management frame in the management frames.

4. The method according to claim 3, wherein the part of the management frames comprises:
one management frame other than the specified management frame in the management frames; or
two or more management frames other than the specified management frame in the management frames.

5. The method according to claim 3 or 4, wherein the first management frame contains multi-link operation link information, wherein the multi-link operation link information indicates a link identifier bitmap field of a target station.

6. The method according to any one of claims 3 to 5, wherein any two sensing-related management frames other than the specified management frame are not simultaneously transmitted over at least two links.

7. The method according to claim 1, wherein the specified management frame comprises all of the management frames.

8. The method according to any one of claims 1 to 7, wherein the management frames are allowed to be buffered.

9. The method according to any one of claims 1 to 7, wherein
the specified management frame is not allowed to be buffered; and
other management frames other than the specified management frame in the management frames are allowed to be buffered.

10. An apparatus for transmitting management frames, comprising:
a transmitting module, configured to transmit management frames related to sensing on a first link, wherein the management frames are individually addressed frames, and a specified management frame in the management frames is only transmitted over the first link.

11. The apparatus according to claim 10, wherein the specified management frame comprises at least one of:
a sensing measurement report frame or a sensing by proxy report frame.

12. The apparatus according to claim 10 or 11, wherein the transmitting module is configured to:
transmit a first management frame over a second link, wherein the second link is any one of other links, the other links being links in at least two links of the multi-link device other than the first link, the first management frame is part of management frames other than the specified management frame in the management frames, or the first management frame is all management frames other than the specified management frame in the management frames.

13. The apparatus according to claim 12, wherein the part of the management frames comprises:
one management frame in the management frames other than the specified management frame; or
two or more management frames in the management frames other than the specified management frame.

14. The apparatus according to claim 12 or 13, wherein the first management frame contains multi-link operation link information, wherein the multi-link operation link information indicates a link identifier bitmap field of a target station.

15. The apparatus according to any one of claims 12 to 14, wherein any two sensing-related management frames other than the specified management frame are not transmitted simultaneously over at least two links.

16. The apparatus according to claim 10, wherein the specified management frame comprises all of the management frames.

17. The apparatus according to any one of claims 10 to 16, wherein a frame body of each of the management frames is allowed to be buffered.

18. The apparatus according to any one of claims 10 to 16, wherein
a frame body of the specified management frame is not allowed to be buffered;
frame bodies of other management frames other than the specified management frame in the management frames are allowed to be buffered.

19. A communication device, wherein the communication device is implemented as a multi-link device, the communication device comprising a processor, a memory, and a transceiver;
wherein the transceiver is configured to transmit management frames related to sensing over a first link, wherein the management frames are individually addressed frames, and a specified management frame in the management frames is only transmitted over the first link.

20. A computer-readable storage medium, wherein the storage medium stores a computer program, wherein the computer program, when executed by a processor, causes the processor to perform the method for transmitting management frames as defined in any one of claims 1 to 8.

21. A chip, wherein the chip, when running in a communication device, causes the communication device to perform the method for transmitting management frames as defined in any one of claims 1 to 9.

22. A computer program product, wherein the computer program product comprises one or more computer instructions, the one or more computer instructions being stored in a computer-readable storage medium; wherein a processor of a communication device, when reading the one or more computer instructions from the computer-readable storage medium and executing the one or more computer instructions, causes the communication device to perform the method for transmitting management frames as defined in any one of claims 1 to 9.

23. A computer program, wherein the computer program, when run by a processor of a communication device, causes the communication device to perform the method for transmitting management frames as defined in any one of claims 1 to 9.
